# EUROPÄISCHE PATENTSCHRIFT

(11) **EP 2 646 277 B1**
(45) Veröffentlichungstag und Bekanntmachung des Hinweises auf die Patenterteilung: **15.04.2020**
(21) Anmeldenummer: 11805760.3
(22) Anmeldetag: 28.11.2011
(51) Int. Cl.: B60L 53/16, B60L 53/00

(54) **LADESCHNITTSTELLE FÜR EIN ELEKTROFAHRZEUG**
CHARGING INTERFACE FOR AN ELECTRIC VEHICLE
INTERFACE DE CHARGE POUR UN VÉHICULE ÉLECTRIQUE

(30) Priorität: 01.12.2010 DE 102010053137
(43) Veröffentlichungstag der Anmeldung: 09.10.2013
(73) Patentinhaber: Volkswagen Aktiengesellschaft, 38440 Wolfsburg (DE)
(72) Erfinder: TANNEBERGER, Volkmar, 38527 Meine (DE); MILKE, Ralf, 38173 Erkerode (DE); PATUSCHKA, Sven, 38126 Braunschweig (DE); LANGE, Klaus, 38108 Braunschweig (DE); BOY, Andreas, 38442 Wolfsburg (DE); BURNUS, Oliver, 29393 Gross Oesingen (DE); IDCZAK, Torsten, 38477 Jembke (DE)
(86) Internationale Anmeldenummer: PCT/EP2011/005958
(87) Internationale Veröffentlichungsnummer: WO 2012/072227

(56) Entgegenhaltungen:
- WO-A1-95/06970
- DE-U1- 20 120 114
- GB-A- 2 458 754
- JP-A- 2009 146 711
- JP-A- 2010 166 756

## Beschreibung

Die Erfindung betrifft eine Ladeschnittstelle für ein Kraftfahrzeug, insbesondere ein Elektrofahrzeug, gemäß dem Oberbegriff des Anspruchs 1.

Bei einem Elektrofahrzeug wird zum Laden einer im Fahrzeug eingebauten Traktionsbatterie das Fahrzeug über eine Stromleitung mit einer externen Stromversorgung verbunden, wobei der Ladevorgang eine beträchtliche Zeit in Anspruch nimmt. Auch bei einem mit einem Generator versehenen Elektrofahrzeug kann es von Zeit zu Zeit notwendig sein, das Fahrzeug zur Ladung der Batterie mit einer externen Stromquelle zu verbinden.

Eine derartige Ladeschnittstelle wird beispielsweise in der DE 10 2007 002 025 A1 für eine Fahrzeug mit einem elektromotorischen Antrieb beschrieben, bei der eine von der Karosserie her zugängliche und mit einem Deckel verschließbare Karosserieöffnung vorgesehen ist, in der anstelle eines Einfüllstutzens eine Ladesteckdose angeordnet ist.

Aus der DE 196 42 687 A1 ist eine Ladeschnittstelle mit einer Verriegelungseinrichtung bekannt, mit der ein in die Ladesteckdose eingeführter Ladestecker gegen Entnahme verriegelbar ist. Die von der Verriegelungseinrichtung ausgeübte Sperrwirkung kann dabei von einem Schwenkdeckel ausgeübt werden, der in der Schließstellung gleichzeitig zur Abdeckung der Ladesteckdose dient. Alternativ kann die Verriegelungsvorrichtung eine Sperrwirkung direkt auf den eingeführten Ladestecker ausüben, wobei die Verriegelungsvorrichtung gleichzeitig zur Verriegelung des Schwenkdeckels in der Schließstellung verwendet wird. Zwar bietet der bekannte Schwenkdeckel einen gewissen Schutz gegen Regen und Schnee während der langen Ladezeit, jedoch ist dieser Schutz nicht ausreichend.

Die Druckschrift WO 95/06970 A1 beschreibt eine Ladeschnittstelle für ein Kraftfahrzeug gemäß dem Oberbegriff des Anspruchs 1. Dabei wird ein Ladestecker in eine in einer Karosserieöffnung angeordneten Verbindungseinrichtung eingeführt, wobei die Karosserieöffnung durch einen Deckel, der bündig mit der Karosserieöffnung ist, verschließbar ist. Zum Lagen wird der Deckel manuell geöffnet und ein Ladestecker wird mit einer vorderen Längsnut in eine entgegengesetzt ausgeformte Aufnahmenut der Verbindungseinrichtung eingehängt. Durch eine Rotation des Ladesteckers um die Aufnahmenut schwingt der Ladestecker in die Aufnahmeöffnung der Karosserieöffnung hinein und kontaktiert eine äußere Abdeckung der Verbindungseinrichtung. Im Innern der Verbindungseinrichtung ist eine Ladesteckdose in Form von Kontaktstiften angeordnet, wobei die Kontaktstifte an einer Basis fest angeordnet sind. Die Basis und damit die Kontaktpins sind entlang einer Führung in Richtung zum Ladestecker hin durch eine Bewegungseinrichtung beweglich angeordnet, die nach dem völligen Einrasten des Ladesteckers in der Aufnahmeöffnung der Verbindungseinrichtung freigegeben wird. Durch eine manuelle Betätigung der vom Deckel separaten Bewegungseinrichtung bewegt sich die Basis mit den Kontaktstiften entlang der Führung in Richtung des Ladesteckers und kontaktiert in der Endstellung mit den im Innern des Ladesteckers angeordneten Kontakten.

Die Druckschrift GB 2 458 754 A beschreibt eine Ladevorrichtung für ein Kraftfahrzeug, bei der in einer Karosserieöffnung eine Ladesteckdose angeordnet ist. Mittels eines Faltenbalges, der in axialer Richtung aus der Ladevorrichtung herausgezogen werden kann, kann ein in die Steckdose eingeführter Ladestecker abgestützt werden. Dabei ist die in der Karosserieöffnung angeordnete Ladesteckdose nicht in axialer Richtung beweglich.

Die Druckschrift DE 201 20 114 U1 offenbart eine Anschlussvorrichtung zum Aufladen elektrischer Fahrzeuge mit einer bewegbaren Ladeklemme, die zwischen zwei Positionen klappbar ist. Dabei dient die ausgeklappte Position zum Anschließen der externen Stromversorgung, während die eingeklappte Position die Ruheposition bildet. Ferner kann die Anschlussvorrichtung durch eine Abdeckung geschützt sein. Jedoch wird die Ladeklemme weder in axialer Richtung der Karosserieöffnung bewegt, noch erfolgt eine Verschiebung der Ladesteckdose durch das Öffnen der Abdeckung.

Die Druckschrift JP 2009 146711 A beschreibt eine in einer Karosserieöffnung angeordnete Ladesteckdose, wobei die Ladesteckdose ortsfest an einem Halteblech innerhalb der Karosserieöffnung verschraubt ist. Fernern ist die Ladesteckdose durch einen an der Ladesteckdose angeordneten Steckdosendeckel verschlossen, wobei ein Öffnen dieses Deckels die Steckdose freigibt. Ferner ist die Karosserieöffnung mit einem Karosseriedeckel verschließbar, der mit der Karosserieoberfläche bündig ist. Dieser Karosseriedeckel ist einteilig und wird zum Öffnen aus der Karosserieoberfläche heraus geschwenkt.

Der Erfindung liegt daher die Aufgabe zugrunde, den Wetterschutz einer Ladeschnittstelle eines Kraftfahrzeugs, insbesondere eines Elektrofahrzeuges zu verbessern.

Diese Aufgabe wird durch eine Ladeschnittstelle für ein Kraftfahrzeug mit den Merkmalen des Anspruchs 1 gelöst. Bevorzugte Ausgestaltungen der Erfindung sind Gegenstand der Unteransprüche.

Bei einer Ausführungsform der erfindungsgemäßen Ladeschnittstelle für ein Kraftfahrzeug, insbesondere ein Elektrofahrzeug, zur Ladung der Traktionsbatterie mit einer in einer Karosserieöffnung angeordneten Ladesteckdose und eine die Karosserieöffnung abdeckende Verschlusseinrichtung, wobei die Verschlusseinrichtung durch einen im geschlossenen Zustand der Verschlusseinrichtung die Karosserie bündig abdeckenden Deckel gebildet wird, ist die Ladesteckdose in axialer Richtung der Karosserieöffnung verschiebbar und ein Öffnen der Verschlusseinrichtung bewirkt ein Verschieben der Ladesteckdose in axialer Richtung aus dem Fahrzeuginnern in Richtung Karosserieoberfläche. Dadurch ist die Ladesteckdose der Ladeeinrichtung gegen äußere Einflüsse geschützt und der Ladevorgang einfach zu bewerkstelligen.

Ferner ist die Ladesteckdose in einer in das Fahrzeuginnere reichenden Aufnahmeeinrichtung angeordnet und ein Öffnen der Verschlusseinrichtung bewirkt ein Verschieben der Ladesteckdose in Richtung Karosserieoberfläche, wodurch ein Stecken eines Ladesteckers ermöglicht wird. Ein Wiederverschliessen der Verschlusseinrichtung bewirkt eine Bewegung der Ladesteckdose mit angeschlossenem Ladestecker in das Innere der Aufnahmeeinrichtung, sozusagen in die geschützte Ladestellung.

Zum Verschieben der Ladesteckdose ist die Verschlusseinrichtung vorzugsweise mit der Ladesteckdose mechanisch gekoppelt. Andere Arten der Kopplung sind natürlich möglich, so kann das Öffnen der Verschlusseinrichtung ein Aktivieren eines Aktuators bewirken, der die Ladesteckdose in geeigneter Weise verschiebt.

Weiter bevorzugt weist die Verschlusseinrichtung eine Aussparung zur Aufnahme des Ladekabels des Ladesteckers im verschlossenen Zustand auf. Der eine beträchtliche Zeit in Anspruch nehmende Ladevorgang der Batterie kann dann in einer vor Witterung und externer Beeinträchtigung sicheren Umgebung ablaufen.

Bevorzugte Ausführungsformen der Erfindung werden nachfolgend anhand der Zeichnungen beschrieben. Dabei zeigt
- Fig. 1a: eine geschlossene Ladeschnittstelle gemäß der ersten Ausführungsform,
- Fig. 1b: die Ladeschnittstelle der ersten Ausführungsform beim Öffnen der Verschlusseinrichtung,
- Fig. 1c: die Ladeschnittstelle der ersten Ausführungsform im geöffneten Zustand mit eingestecktem Ladestecker,
- Fig. 1d: die Ladeschnittstelle der ersten Ausführungsform im geöffneten Zustand mit eingestecktem Ladestecker im wieder verschlossenem Zustand,
- Fig. 2a: eine weitere geschlossene Ladeschnittstelle (nicht Bestandteil der Erfindung),
- Fig. 2b: die geöffnete Ladeschnittstelle gemäß Fig. 2a,
- Fig. 2c: die Ladeschnittstelle gemäß Fig. 2b mit eingestecktem Ladestecker,
- Fig. 3a: eine weitere geschlossene Ladeschnittstelle (nicht Bestandteil der Erfindung),
- Fig. 3b: die geöffnete Ladeschnittstelle gemäß Fig. 3a mit eingestecktem Ladestecker, und
- Fig. 3c: die Ladeschnittstelle der Fig. 3b in Draufsicht.

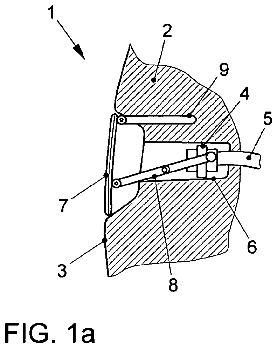

In Fig. 1a ist die erste Ausführungsform der erfindungsgemäßen Ladeschnittstelle 1 schematisch dargestellt. Die in der Karosserie 2 eines Fahrzeugs (nicht dargestellt) angeordnete Ladeschnittstelle umfasst eine Ladesteckdose 4 mit einem entsprechendem internen Ladekabel 5 zur Verbindung der Ladesteckdose 4 mit einer Traktionsbatterie (nicht dargestellt); wobei die Ladesteckdose 4 verschiebbar in einer in das Fahrzeuginnere reichenden Aufnahmeeinrichtung 6 angeordnet ist. Ferner ist die Ladesteckdose 4 mittels einer Mechanik 8 mit einem als Verschlusseinrichtung wirkendem Deckel 7 verbunden, wobei der Deckel 7 mit der Karosserieoberfläche 3 bündig ist. Dazu ist die Aufnahmeeinrichtung 6 im Karosseriebereich des Deckels 7 trichterartig verbreitert. Ferner ist eine ebenfalls in das Innere der Fahrzeugkarosserie 2 reichende Aufnahmeaussparung 9 zur Aufnahme des Deckels 7 vorhanden.

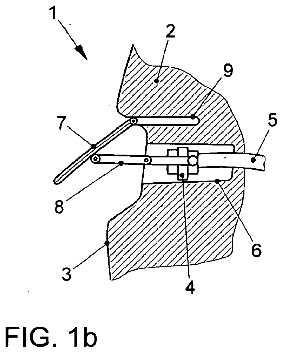

In Fig. 1b ist die Ladeschnittstelle 1 während eines Öffnungsvorgangs dargestellt. Durch das Öffnen des Deckels 7 wird mittels der Mechanik 8 die Ladesteckdose 4 einschließlich dem internen Ladekabel innerhalb der Aufnahmeeinrichtung in Richtung zur Karosserieoberfläche 3 bewegt, mit anderen Worten hier im Ausführungsbeispiel wird die Ladesteckdose mit dem internen Ladekabel 5 aus dem Innern der Aufnahmeeinrichtung nach außen herausgezogen. Es ist in Fig. 1b erkennbar, dass mit dem Öffnen des Deckels 7 dieser in seiner Aufnahmeaussparung 9 eintritt.

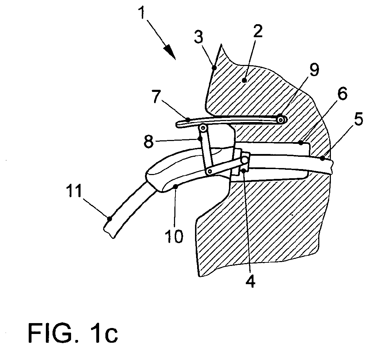

Fig. 1c zeigt die Ladeschnittstelle 1 im geöffneten Zustand. Bei maximal geöffnetem Deckel 7 ist dieser zu einem Teil in seiner Aufnahmeaussparung 9 oder Aufnahmeschlitz eingetaucht. Die Mechanik 8 ist dazu entsprechend ausgestaltet und mit einem Gelenk versehen. Ferner ist die Ladesteckdose maximal herausgezogen und kann nun mit einem Ladestecker 10, der ein entsprechendes externes Ladekabel 11 aufweist, verbunden werden.

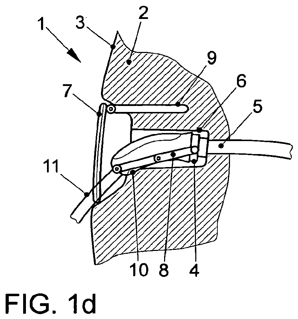

Fig. 1d zeigt schließlich die Ladeschnittstelle 1 während des Ladevorgangs mit angestecktem Ladestecker 10. Durch das Schließen des Deckels 7 wird die Ladesteckdose 5 mit angeschlossenem Ladestecker wieder in die Aufnahmeeinrichtung 6 hinein geschoben und der Deckel 7 schließt wieder bündig mit der Karosserieoberfläche 3 ab. Durch eine Aussparung (nicht dargestellt) im unteren Bereich des Deckels 7 wird das externe Ladekabel 11 nach außen geführt und gesichert. Durch die Anordnung von Ladesteckdose 4 und des mit ihr verbundenem Ladesteckers 10 im hinteren Bereich der Aufnahmeeinrichtung 6 sind diese gegen äußere Einflüsse gesichert. Ein Wetterschutz ist auch dadurch gegeben, dass eventuell von außen eindringendes Wasser oder Schnee im vorderen trichterförmigen Bereich der Aufnahmeeinrichtung wieder nach außen austreten kann und den inneren Bereich der Aufnahmeeinrichtung nicht erreichen kann. Ferner kann man zusätzlich weitere geeignete Abdichtmaßnahmen treffen.

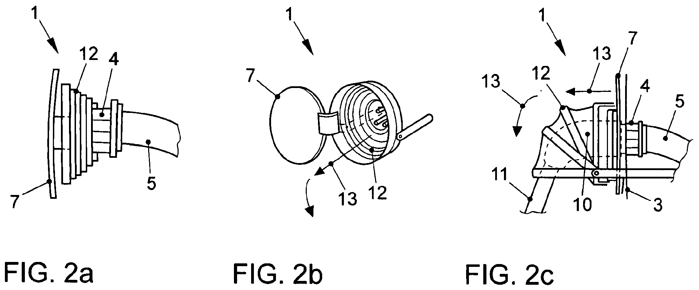

In Fig. 2 ist schematisch eine weitere Ladeschnittstelle 1 dargestellt. Dabei umfasst die Ladeschnittstelle 1 eine in einer Karosserie (nicht dargestellt) eines Fahrzeugs angeordnete Ladesteckdose 4 mit einem internen Ladekabel 5 sowie einen in der Karosserie angeordneten Deckel 7. Die Ladesteckdose 4 weist einen im geschlossenen Zustand zusammengeschobenen Faltenbalg 12 auf, der an der Ladesteckdose 4 angeordnet sein kann.

Mit dem in Fig. 2b dargestellten Öffnen des Deckels 7 kann, wie in der ersten Ausführungsform, die Ladesteckdose 4 heraus gezogen werden. Es ist auch möglich, dass die Ladesteckdose 4 ortsfest verbleibt. Der Pfeil 13 zeigt die Bewegungsrichtung des Faltenbalges 12 an, wenn dieser nach außen gezogen wird.

Fig. 2c zeigt die Ladeschnittstelle 1 im geöffneten Zustand mit einem mit der Ladesteckdose 4 verbundenen Ladestecker 10 mit externem Ladekabel 11 in seitlicher Ansicht. Der Faltenbalg 12 ist dabei herausgezogen und deckt die Verbindung Ladesteckdose 4 mit eingestecktem Ladestecker 11 ab, wobei die Pfeile 13 die Richtung des Herausziehens des Faltenbalgs 12 anzeigen. Hier ist die Ausführungsform dargestellt, bei welcher die Ladesteckdose 4 im Wesentlichen bis zur Karosserieoberfläche 3 herausgezogen ist.

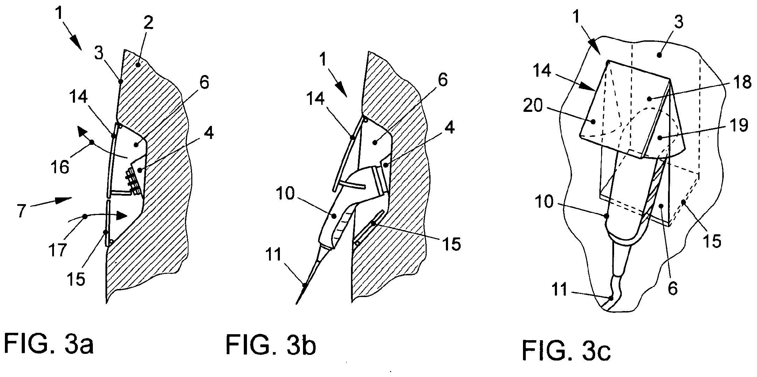

Die Figuren 3a bis 3c zeigen eine weitere Ladeschnittstelle 1. In einer Aufnahmeeinrichtung 6 der Karosserie 2 ist in Fig. 3a eine Ladeschnittstelle 1 mit einer Ladesteckdose 4 im geschlossenen Zustand dargestellt. Die Aufnahmeeinrichtung 6 der Ladesteckdose 4 weist einen Deckel 7 auf, der im geschlossenen Zustand mit der Karosserieoberfläche 3 bündig abschließt. Hier ist der Deckel 7 geteilt und besteht aus einem oberen Deckelteil 14 und einem unteren Deckelteil 15, die in unterschiedlicher Richtung beweglich sind, wie dies durch die Richtungspfeile 16 und 17 schematisch dargestellt ist. Mit anderen Worten, der obere Deckelteil 14 wird nach oben und außen zum Öffnen bewegt, während der untere Deckelteil nach innen in die Aufnahmeeinrichtung 6 hineinklappt.

Fig. 3b zeigt die Ladeschnittstelle 1 im geöffneten bzw. teilgeöffneten Zustand mit an der Ladesteckdose 4 angeschlossenem Ladestecker 10 mit externem Ladekabel 11 während eines Ladevorgangs. Dabei wird der Ladestecker 10 von dem oberen Deckelteil 14 gegen Umwelteinflüsse wie Regen oder Schnee abgedeckt.

Fig. 3c zeigt die Ladeschnittstelle der Ladezustand in seitlicher Draufsicht. Das obere Deckelteil 14 des Deckels 7 besteht aus einem Frontteil 18 sowie zwei seitlichen, im Wesentlichen dreieckigen Seitenteilen 19, 20, wodurch die Ladeschnittstelle 1 mit eingestecktem Ladestecker 10 vor äußeren Witterungseinflüssen geschützt ist.

### Bezugszeichenliste

- 1: Ladeschnittstelle
- 2: Karosserie
- 3: Karosserieoberfläche
- 4: Ladesteckdose
- 5: Ladekabel intern
- 6: Aufnahmeeinrichtung der Ladesteckdose
- 7: Deckel
- 8: mechanische Verbindung zwischen Deckel und Ladesteckdose
- 9: Aufnahmeaussparung für den Deckel
- 10: Ladestecker
- 11: Ladekabel extern
- 12: Faltenbalg
- 13: Richtung der Faltenbalgbewegung
- 14: oberer Deckel
- 15: unterer Deckel
- 16: Bewegungsrichtung oberer Deckel
- 17: Bewegungsrichtung unterer Deckel
- 18: Frontteil
- 19: Seitenteil
- 20: Seitenteil

## Patentansprüche

1. Ladeschnittstelle (1) für ein Kraftfahrzeug, insbesondere ein Elektrofahrzeug, zur Ladung der Traktionsbatterie mit einer in einer Karosserieöffnung des Kraftfahrzeugs angeordneten Ladesteckdose (4) und einen die Karosserieöffnung abdeckenden Verschlusseinrichtung (7), wobei die Verschlusseinrichtung (7) durch einen im geschlossenen Zustand der Verschlusseinrichtung (7) die Karosserie (2) bündig abdeckenden Deckel gebildet wird, und die Ladesteckdose (4) in einer in das Fahrzeuginnere reichenden Aufnahmeeinrichtung (6) angeordnet ist,
**dadurch gekennzeichnet, dass**,
die Ladesteckdose (4) in axialer Richtung der Karosserieöffnung in Richtung der Karosserieoberfläche (3) und in das Innere der Aufnahmeeinrichtung (6) verschiebbar ist,
ein Öffnen der Verschlusseinrichtung ein Verschieben der Ladesteckdose (4) in axialer Richtung der Karosserieöffnung aus dem Fahrzeuginnern in Richtung Karosserieoberfläche (3) bewirkt und ein Stecken eines Ladesteckers (10) erlaubt, und
ein Verschließen der Verschlusseinrichtung (7) eine Bewegung der Ladesteckdose (4) mit angeschlossenem Ladestecker (10) in das Innere der Aufnahmeeinrichtung (6) in eine geschützte Ladestellung bewirkt, wodurch die Ladesteckdose (4) gegen äußere Einflüsse geschützt ist.

2. Ladeschnittstelle nach Anspruch 1, **dadurch gekennzeichnet, dass** die Verschlusseinrichtung (7) mit der Ladesteckdose (4) mechanisch gekoppelt ist.

3. Ladeschnittstelle nach Anspruch 1 oder 2, **dadurch gekennzeichnet, dass** die Verschlusseinrichtung (7) eine Aussparung zur Aufnahme des Ladekabels (11) des Ladesteckers (10) im verschlossenen Zustand aufweist.

4. Ladeschnittstelle nach einem der vorangegangenen Ansprüche, **dadurch gekennzeichnet, dass** die Verschlusseinrichtung (7) während des Vorgangs des Öffnens in eine in der Karosse (2) angeordneten Deckelaufnahme (9) verbracht wird.

## Claims

1. Charging interface (1) for a motor vehicle, in particular an electric vehicle, for charging the traction battery, comprising a charging socket (4) arranged in a vehicle body opening of the motor vehicle and a closure device (7) covering the vehicle body opening, wherein the closure device (7) is formed by a cover which covers the vehicle body (2) in a flush manner in the closed state of the closure device (7) and the charging socket (4) is arranged in a receiving device (6) extending into the vehicle interior,
**characterized in that**
the charging socket (4) is displaceable in the axial direction of the vehicle body opening in the direction of the vehicle body surface (3) and into the interior of the receiving device (6), opening the closure device brings about a displacement of the charging socket (4) in the axial direction of the vehicle body opening from the vehicle interior in the direction of the vehicle body surface (3) and permits an insertion of a charging plug (10), and closing the closure device (7) brings about a movement of the charging socket (4) with the charging plug (10) connected thereto into a protected charging position in the interior of the receiving device (6), whereby the charging socket (4) is protected against external influences.

2. Charging interface according to Claim 1, **characterized in that** the closure device (7) is mechanically coupled to the charging socket (4).

3. Charging interface according to Claim 1 or 2, **characterized in that** the closure device (7) has a recess for receiving the charging cable (11) of the charging plug (10) in the closed state.

4. Charging interface according to one of the preceding claims, **characterized in that** the closure device (7) is displaced during the opening process into a cover receiver (9) arranged in the vehicle body (2).

## Revendications

1. Interface de charge (1) pour un véhicule automobile, en particulier un véhicule électrique, pour charger la batterie de traction, comprenant une prise de charge (4) disposée dans une ouverture de la carrosserie du véhicule automobile et un dispositif de fermeture (7) recouvrant l'ouverture de la carrosserie, le dispositif de fermeture (7) étant formé par un couvercle recouvrant en affleurement la carrosserie (2), dans l'état fermé du dispositif de fermeture (7), et la prise de charge (4) étant disposée dans un dispositif de réception (6) s'étendant à l'intérieur du véhicule,
**caractérisée en ce que**
la prise de charge (4) peut être déplacée dans la direction axiale de l'ouverture de la carrosserie dans la direction de la surface de la carrosserie (3) et à l'intérieur du dispositif de réception (6),
une ouverture du dispositif de fermeture provoque un déplacement de la prise de charge (4) dans la direction axiale de l'ouverture de la carrosserie depuis l'intérieur du véhicule dans la direction de la surface de la carrosserie (3) et permet un enfichage d'un connecteur de charge enfichable (10), et
une fermeture du dispositif de fermeture (7) provoque un déplacement de la prise de charge (4) avec le connecteur de charge enfichable raccordé (10) à l'intérieur du dispositif de réception (6) dans une position de charge protégée, de sorte que la prise de charge (4) soit protégée contre les influences extérieures.

2. Interface de charge selon la revendication 1, **caractérisée en ce que** le dispositif de fermeture (7) est accouplé mécaniquement à la prise de charge (4).

3. Interface de charge selon la revendication 1 ou 2, **caractérisée en ce que** le dispositif de fermeture (7) présente un évidement pour recevoir le câble de charge (11) de la prise de charge (10) dans l'état fermé.

4. Interface de charge selon l'une quelconque des revendications précédentes, **caractérisée en ce que** le dispositif de fermeture (7) est amené dans un logement de couvercle (9) disposé dans la carrosserie (2) au cours de l'opération d'ouverture.
